# EUROPEAN PATENT APPLICATION

(11) **EP 4 760 837 A1**
(43) Date of publication of application: **17.06.2026**
(21) Application number: 24900905.1
(22) Date of filing: 14.11.2024
(51) Int. Cl.: H01M 10/04

(54) **BATTERY CELL MANUFACTURING DEVICE**

(30) Priority: 04.12.2023 KR 20230173100
(71) Applicant: LG Energy Solution, Ltd., Seoul 07335 (KR)
(72) Inventor: HWANG, Gyu Ok, Daejeon 34122 (KR)
(74) Representative: Plasseraud IP
(86) International application number: PCT/KR2024/017941
(87) International publication number: WO 2025/121718

(57) **Abstract**

A battery cell manufacturing device according to certain embodiments of the present disclosure may comprise: a support plate on which a battery cell is placed, and a pressing unit that presses a surface of the battery cell while advancing in an advancing direction over an area of the battery cell so as to press the area of the battery cell, wherein the pressing unit comprises a plurality of pressing rollers that are arranged in a direction orthogonal to the advancing direction, and make contact with and press the surface of the battery cell, respectively, and wherein the pressing unit advances in a state in which the surface of the battery cell is pressed by each of the plurality of pressing rollers, so that wrinkles do not occur on the surface of the battery cell when pressing with the pressing unit.

## Description

### [TECHNICAL FIELD]

### Cross-Reference to Related Application(s)

This application claims priority to and the benefit of Korean Patent Application no. KR10-2023-0173100, filed on December 4, 2023, the entire contents of which are incorporated herein by reference.

The present disclosure relates to a battery cell manufacturing device, and more particularly, to a battery cell manufacturing device that can prevent formation of wrinkles on the battery surface in a degasing process.

### [BACKGROUND ART]

The use of mobile devices such as cell phones, laptops, camcorders and digital cameras, and energy storage systems(ESS) has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles(EV), hybrid electric vehicles(HEV), plug-in hybrid electric vehicles(P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium secondary batteries are emerging as the most popular, as they are freely rechargeable, have low self-discharge rates, and have high energy density.

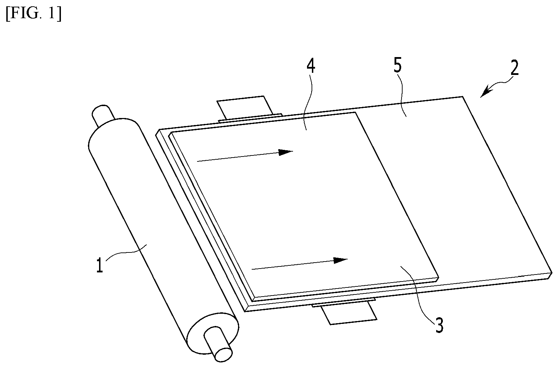

In the case of a pouch-type secondary battery in such lithium secondary batteries, a degassing process is performed to remove gas generated inside the pouch during an activation process through charging and discharging. FIG. 1 is a perspective view showing a conventional battery cell manufacturing device for performing the degassing process. As shown in FIG. 1, the degassing process is performed by a process in which a housing part 4 for housing an electrode assembly 3 of a battery cell 2 is pressed by a pressing roller 1 to move gas generated in the housing part 4 to a gas pocket part 5, the gas pocket part 5 is perforated to form a degassing hole, and then the gas that has moved to the gas pocket part 5 is discharged to the outside through the degassing hole.

However, when the housing part 4 of the battery cell 2 is pressed by the pressing roller 1, friction between the pressing roller 1 and the surface of the battery cell 2 causes pushing on the surface of the battery cell 2, which causes a problem that the appearance of the battery cell 2 is deformed, such as wrinkles being formed on the surface of the battery cell.

### [DETAILED DESCRIPTION OF THE INVENTION]

### [Technical Problem]

Therefore, it is an object of the present disclosure to provide a battery cell manufacturing device that can prevent formation of wrinkles on the battery surface.

However, the technical objects solved by the embodiments of the present disclosure are not limited to those disclosed above, and may be expanded in various ways within the scope of the technical idea included in the present disclosure.

### [Technical Solution]

According to certain aspects of the present disclosure, there is provided a battery cell manufacturing device, comprising: a support plate on which a battery cell is placed; and a pressing unit that presses a surface of the battery cell while advancing in one direction over a large area of the battery cell so as to press the large area of the battery cell, wherein the pressing unit comprises a plurality of pressing rollers that are arranged in a direction orthogonal to the advancing direction, and make contact with and press the surface of the battery cell, respectively, and wherein the pressing unit advances in a state in which the surface of the battery cell is pressed by each of the plurality of pressing rollers, so that wrinkles do not occur on the surface of the battery cell when pressing with the pressing unit.

Each of the plurality of pressing rollers is independently rotatable.

The plurality of pressing rollers are arranged so that their rotation axes are parallel to each other, and may be arranged so that the rotation axis of at least one pressing roller among the plurality of pressing rollers does not overlap with an extension line of the rotation axis of the other pressing rollers.

The arrangement of the plurality of pressing rollers may be determined based on a pressure at which the pressing rollers press the battery cell, an advancing speed of the pressing rollers, and an area where the pressing rollers make contact with the battery cell.

The plurality of pressing rollers may be arranged so that the pressing rollers positioned closer to a center press the surface of the battery cell first.

The battery cell manufacturing device further comprises a pressing jig arranged on at least both side edges of the battery cell so as to press the at least both side edges of the battery cell, wherein the pressing unit may advance in a state in which the edges of the battery cell are pressed by the pressing jig.

The pressing jig comprises a main body part that extends in a direction orthogonal to the advancing direction of the pressing unit; and a pair of pressing parts that extend in parallel to the advancing direction of the pressing roller from both ends of the main body part and face each other, wherein the pressing unit may press the battery cell between the pair of pressing parts.

The pressing unit is movable in a direction orthogonal to the support surface of the support plate, and the pressing unit may advance while passing through the main body part and then moving in a pressing direction of applying pressure to the battery cell.

The main body part may comprise an inclined part formed on an advancing direction side of the pressing unit, and the pressing unit may advance while moving in the pressing direction along the inclined part to thereby press the battery cell.

The inclined part may comprise a first inclined part that forms a predetermined inclination angle with the support plate, and a second inclined part that forms a smaller inclination angle than the predetermined inclination angle of the first inclined part.

The inclined part may be configured such that an inclination angle formed with the support plate gradually decreases toward the advancing direction side of the pressing unit.

The pressing unit may comprise an elastic member that applies an elastic force to the plurality of pressing rollers in the pressing direction.

A gap between the pair of pressing parts is adjustable.

The main body part may comprise a first main body part and a second main body part which are each connected to the pair of pressing parts, and the first main body part and the second main body part are expandable and contractible in a telescopic manner.

Each of the plurality of pressing rollers is movable in a direction orthogonal to the support surface of the support plate.

At least some of the plurality of pressing rollers may advance while moving in a pressing direction of applying pressure to the battery cell.

The pressing roller located between the pair of pressing parts among the plurality of pressing rollers may advance while moving in a pressing direction of applying pressure to the battery cell.

The pressing jig may be made of a metallic material including stainless steel, or a non-metallic material including Teflon or acrylic.

The pressing jig may be mounted in a replaceable manner.

The plurality of pressing rollers may comprise a first array arranged in a direction orthogonal to the advancing direction and a second array arranged side by side with the first array.

The pressing rollers of the first array and the pressing rollers of the second array are arranged in a staggered manner with respect to each other.

### [Advantageous Effects]

A battery cell manufacturing device according to certain embodiments can discharge gas while preventing formation of wrinkles on the battery surface in a degasing process.

The effects of the present disclosure are not limited to the effects mentioned above and additional other effects not described above will be clearly understood from the description of the appended claims by those skilled in the art.

### [BRIEF DESCRIPTION OF THE DRAWING]

FIG. 1 is a conceptual diagram showing a battery cell manufacturing device according to a prior art.
FIG. 2 is a schematic diagram of a pouch-type battery cell according to certain embodiments of the present disclosure.
FIG. 3 is a perspective view showing a state in which a pressing unit of a battery cell manufacturing device according to certain embodiments of the present disclosure presses a battery cell.
FIG. 4 is a perspective view showing a state before a pressing jig of a battery cell manufacturing device according to certain other embodiments of the present disclosure presses a battery cell.
FIG. 5 is a perspective view showing a state after a pressing jig of the battery cell manufacturing device shown in FIG. 4 presses a battery cell.
FIG. 6 is a perspective view showing a modified embodiment of the battery cell manufacturing device shown in FIG. 4.
FIG. 7 is a cross-sectional view cut in the A-A direction to explain a state in which a pressing roller of the battery cell manufacturing device shown in FIG. 5 presses a battery cell.
FIG. 8 is a cross-sectional view showing a modified embodiment of the pressing jig shown in FIG. 7.
FIG. 9 is a cross-sectional view showing another modified embodiment of the pressing jig shown in FIG. 7.
FIG. 10 is a cross-sectional view showing a modified embodiment of the pressing unit shown in FIG. 7.
FIG. 11 is a perspective view showing a battery cell manufacturing device according to further additional embodiments of the present disclosure.
FIG. 12 is a perspective view for explaining a state in which the pressing roller of the battery cell manufacturing device shown in FIG. 11 presses a battery cell.
FIG. 13 is a top view for explaining the arrangement of the pressing roller of the battery cell manufacturing device shown in FIG. 12.
FIG. 14 is a top view for explaining the arrangement of the pressing roller of the battery cell manufacturing device according to further additional embodiments of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Embodiments of the present disclosure will be described with reference to the accompanying drawings.

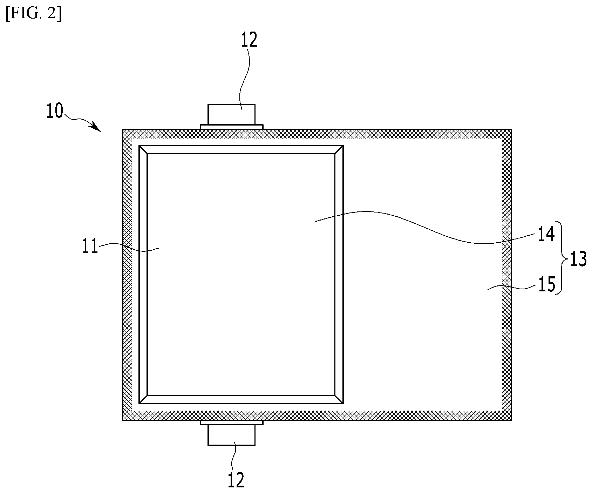

FIG. 2 is a schematic diagram of a pouch-type battery cell according to certain embodiments of the present disclosure.

Referring to FIG. 2, a battery cell 10 according to certain embodiments of the present disclosure may be a pouch-type battery cell 10 in which an electrode assembly having electrode leads 12 protruding in both directions is housed in a pouch case 13. However, this is only one example, and a battery cell according to certain other embodiments of the present disclosure may be a pouch-type battery cell in which the electrode leads 12 protrude in one direction. One of the electrode leads 12 is a positive electrode lead, and the other is a negative electrode lead.

The battery cell 10 may be in the form of a rectangular sheet. The battery cell 10 may be formed by housing the electrode assembly 11 in a pouch case 13 made of a laminate sheet including a resin layer and a metal layer, and then bonding the outer peripheral side of the pouch case 13. The battery cell 10 may be manufactured by bonding the peripheral part of the pouch case 13 while housing the electrode assembly 11 in the pouch case 13. In certain other embodiments, the battery cell 10 may be manufactured by housing the electrode assembly 11 in a state where one side of the pouch case 13 is folded, and the remaining sides may be sealed.

The electrode assembly 11 includes a positive electrode, a separator, and a negative electrode that are alternately laminated. The positive electrode and the negative electrode are manufactured by applying a slurry of an electrode active material, a binder resin, a conductive material, and other additives to at least one surface of a current collector. In the case of the positive electrode, the electrode active material used may be a typical positive electrode active material such as a lithium-containing transition metal oxide, and in the case of the negative electrode, the electrode active material used may be a typical negative electrode active material such as lithium metal, carbon material, and metal compound or a mixture thereof, which can occlude and release lithium ions. The separator may employ a porous polymer film that blocks contact between a positive electrode and a negative electrode to prevent them from being short-circuited and enable the transfer of charge during charging or discharging.

The pouch case 13 of the laminate sheet may include an inner resin layer for sealing, a metal layer for preventing penetration of materials, and an outermost outer resin layer. Based on the electrode assembly 11 inside the pouch case 13, the inner resin layer may be located on the innermost side, the outer resin layer may be located on the outermost side, and the metal layer may be located between the inner resin layer and the outer resin layer.

The outer resin layer may have excellent tensile strength and weather resistance relative to its thickness and may exhibit electrical insulation properties in order to protect the electrode assembly 11 from the outside. The outer resin layer may include a polyethylene terephthalate (PET) resin or a nylon resin. The metal layer may prevent air, moisture, etc. from flowing into the inside of the pouch-type secondary battery. The metal layer may include aluminum (Al). The inner resin layer may be thermally fused to each other by heat and/or pressure applied in a state where the electrode assembly is embedded. The inner resin layer may include casted polypropylene (CPP) or polypropylene (PP).

The pouch case 13 before the degassing process is completed can be divided into two portions. The pouch case 13 may include a housing part 14 that can house the electrode assembly 11 and a gas pocket part 15 that forms a collection space for activated gas generated in a charge and discharge process. As mentioned below, the pressing unit 130 presses the housing part 14 of the battery cell 10, thereby forcibly discharging gas remaining inside the electrode assembly 11 and the housing part 14 into the gas pocket part 15.

Meanwhile, although not shown in FIG. 2, the pouch case 13 may include a degas hole formed by perforating at least some of the gas pocket part 15. The degas hole may serve as a passage for discharging the gas collected in the gas pocket part 15 to the outside of the pouch case 13.

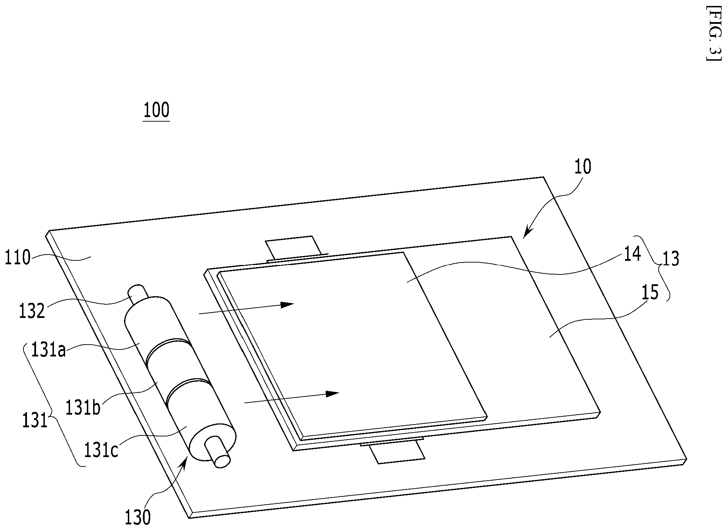

FIG. 3 is a perspective view showing a state in which a pressing unit of a battery cell manufacturing device according to certain embodiments of the present disclosure presses a battery cell.

Referring to FIG. 3, the battery cell manufacturing device 100 may include a support plate 110 on which a battery cell 10 is placed, and a pressing unit 130 that presses the surface of the battery cell 10 while advancing in one direction over the battery cell 10 so as to press the large area of the battery cell 10. At this time, the pressing unit 130 is arranged in a direction orthogonal to the advancing direction, and includes a plurality of pressing rollers 131a to 131c that each make contact with the surface of the battery cell 10. In order to ensure that wrinkles do not occur on the surface of the battery cell 10 when pressing the battery cell 10 with the pressing unit 130, the pressing unit 130 may advance in a state in which the surface of the battery cell 10 is pressed by the plurality of pressing rollers 131a to 131c.

The battery cell 10 may be located inside a chamber (not shown) in which a negative pressure is formed in the internal space in order to further facilitate gas discharge. For example, the battery cell 10 may be loaded on a support plate 110 within the chamber. In the example shown in FIG. 3, the battery cell 10 is shown as being arranged horizontally on the support plate 110, however, the battery cell 10 is not limited to being arranged only in the shape shown in the figure, and in some cases, the battery cell 10 may be arranged vertically on the support plate 110 to perform the degassing process.

The pressing unit 130 presses the battery cell 10 while advancing in one direction, for example, a direction from one surface of the housing part 14 toward the other side to which the gas pocket part 15 is connected (hereinafter, for convenience of explanation, referred to as the advancing direction) in order to discharge the gas remaining in the electrode assembly 11 to the gas pocket part 15. Thereby, the pressing unit 130 can forcibly discharge the gas remaining inside the housing part 14 and the electrode assembly 11 in the direction of the gas pocket part 15. Meanwhile, although not shown in FIG. 3, the pressing unit 130 may include a separate driving device for advancing the pressing unit 130 in the advancing direction.

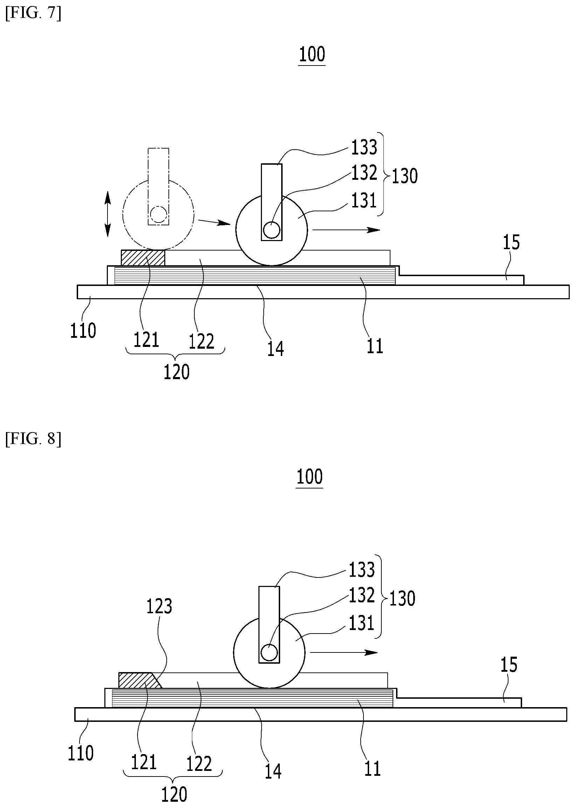

The pressing unit 130 may include a pressing roller 131 that makes contact with the surface of a battery cell 10 and presses the battery cell 10, a rotational shaft 132 that rotatably supports the pressing roller 131, and a connecting member 133 (see FIG. 7) connected to the rotational shaft 132. The pressing roller 131 may include a plurality of pressing rollers 131a to 131c that make contact with the surface of the battery cell 10 and press the battery cell 10. In the example shown in FIG. 3, a case in which the number of pressing rollers 131 is three is described, but is not limited thereto, and the number of pressing rollers can be changed depending on the size of the battery cell 10, and the like.

The plurality of pressing rollers 131a to 131c are each independently rotatable. In case where the area of the battery cell 10 is large, if the pressing unit 130 advances while pressing the battery cell 10, the area where the pressing unit 130 make contact with the battery cell 10 becomes wide, so that pushing of the pouch case 13 may be generated following the advance of the pressure unit 130. Specifically, the battery cells 10 may be configured such that the degree of pushing generating on the surface of the pouch case 13 differs along the longitudinal direction of the pressing roller 131. Thereby, the surface area of the pouch case 13 pressed by the pressing unit 130 may slightly increase or decrease along the longitudinal direction of the pressing roller 131. If the pressing unit 130 presses the entire area of the battery cell 10 at the same speed, the surface area of the pouch case 13 that must be pressed along the longitudinal direction of the pressing roller 131 becomes different, so that pushing of the pouch case 13 may be generated on part of the battery cell 10.

Therefore, when the plurality of pressing rollers 131a to 131c are each independently rotated, the rotation speeds of the plurality of pressing rollers 131a to 131c can be made different along the longitudinal direction of the pressing unit 130, thereby preventing the pouch case 13 from being pushed due to the movement of the pressing unit 130.

The plurality of pressing rollers 131a to 131c may advance while rotating around the rotation axis 132. At this time, the plurality of pressing rollers 131a to 131c may rotate due to friction with the battery cell 10 while the pressing unit 130 advances in the advancing direction. Alternatively, the pressing unit 130 may include a separate rotation driving device for rotating the plurality of pressing rollers 131a to 131c, and the plurality of pressing rollers 131a to 131c may be rotated by the rotation driving device.

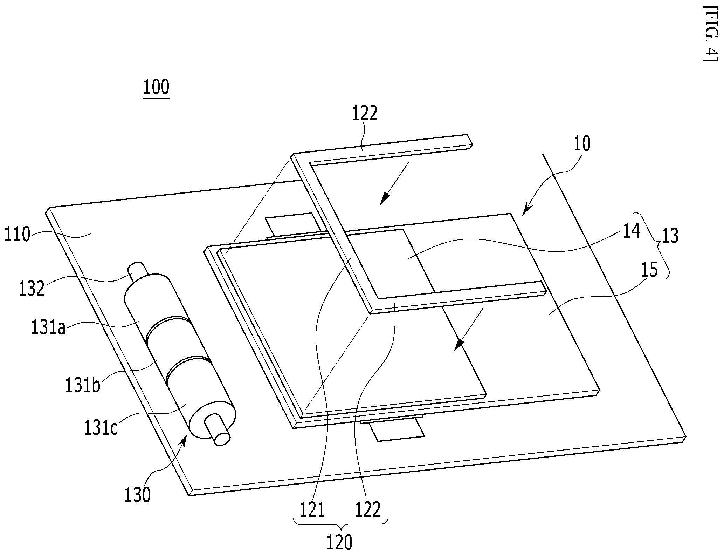

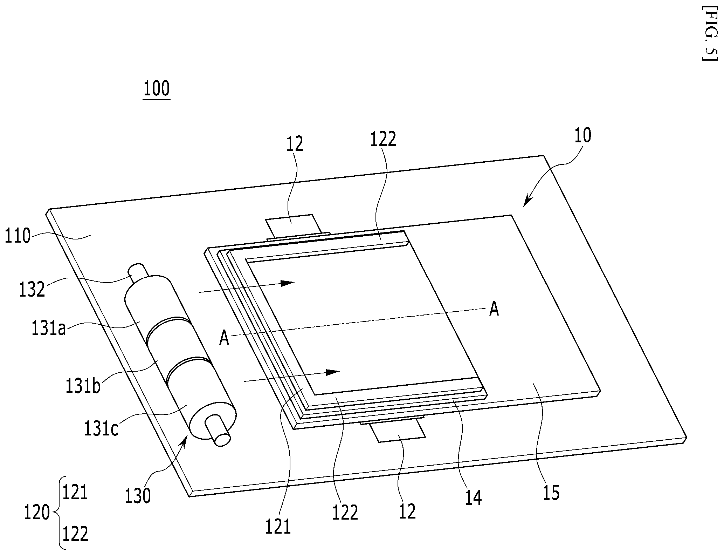

FIG. 4 is a perspective view showing a state before a pressing jig of a battery cell manufacturing device according to certain other embodiments of the present disclosure presses a battery cell. FIG. 5 is a perspective view showing a state after a pressing jig of the battery cell manufacturing device shown in FIG. 4 presses a battery cell.

Referring to FIGS. 4 and 5, the battery cell manufacturing device 100 may include a pressing jig 120 arranged on at least both side edges of the battery cell 10 so as to press the at least both side edges of the battery cell 10. In order to ensure that wrinkles do not occur on the surface of the battery cell 10 when pressing with the pressing unit 130, the pressing unit 130 may advance in a state in which the edges of the battery cell 10 are pressed by the pressing jig 120.

The pressing jig 120 is movable in a direction orthogonal to the support surface of the support plate 110. As shown in FIGS. 4 and 5, when the battery cell 10 is loaded on the support plate 110, the pressing jig 120 may move toward the battery cell 10 to press the edges of the battery cell 10.

The pressing jig 120 may include a main body part 121 that extends in a direction orthogonal to the advancing direction of the pressing unit 130, and a pair of pressing parts 122 that extend in parallel to the advancing direction of the pressing roller 131 from both ends of the main body part 121 and face each other. For example, the pressing jig 120 may have a ⊏-shape formed by the main body part 121 and the pressing part 122. Thereby, the pressing jig 120 may press the edge of the housing part 14 of the battery cell 10, more specifically, the remaining edge excluding the portion connected to the gas pocket part 15 at the edge of the housing part 14.

The pressing jig 120 may include a material having rigidity in order to apply pressure to and stably fix the battery cell 10. For example, the pressing jig 120 may include a metallic material including stainless steel, or a non-metallic material including Teflon or acrylic.

In the battery cell manufacturing device 100 according to certain embodiments of the present disclosure, in a state in which the pressing jig 120 first presses the edge of the battery cell 10, the plurality of pressing rollers 131a to 131c of the pressing unit 130 advances while pressing the battery cell 10. More specifically, the plurality of pressing rollers 131a to 131c of the pressing unit 130 can advance in the advancing direction while pressing the battery cell 10 between a pair of pressing parts 122 of the pressing jig 120.

Since the pouch case 13 of the battery cell 10 is pressed by the plurality of pressing rollers 131a to 131c in a state in which the surface is tight by the pressing jig 120, pushing of the pouch case 13 is not generated following the advance of the pressing unit 130. Therefore, the battery cell manufacturing device 100 according to certain embodiments of the present disclosure can prevent problems of generating deformation of the appearance of a battery cell 10, such as formation of wrinkles on the surface of the battery cell 10.

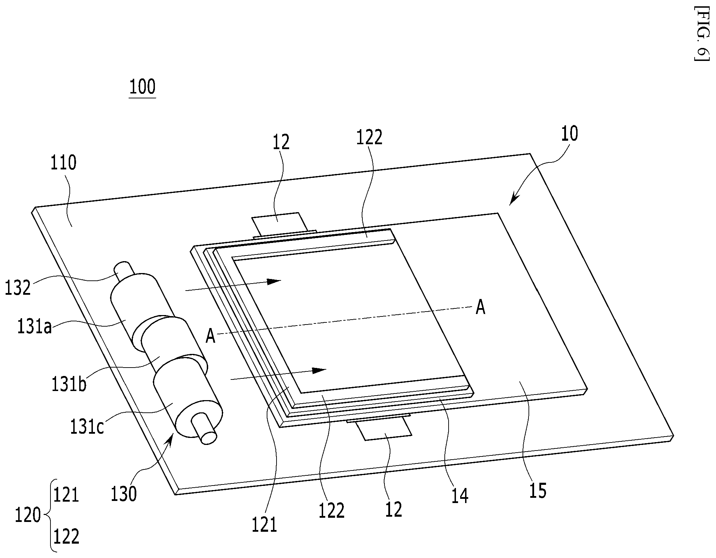

FIG. 6 is a perspective view showing a modified embodiment of the battery cell manufacturing device shown in FIG. 4.

Referring to FIG. 6, the plurality of pressing rollers 131a to 131c are arranged so that their rotation axes are in parallel to each other, and the rotation axis of at least one of the plurality of pressing rollers 131a to 131c may be arranged so that it does not overlap with an extension line of the rotation axis of the other pressing rollers. In other words, the plurality of pressing rollers 131a to 131c may be arranged so as to deviate from a straight line. For example, the plurality of pressing rollers 131a to 131c may be arranged so that the pressing roller 131b arranged toward the center advances first. That is, the pressing roller 131b located at the center may first make contact with the battery cell 10, and then the pressing rollers 131a and 131c located at the edge may make contact with the battery cell 10. Through this arrangement, the central part of the battery cell 10 can be first pressed, and the portions toward the edges of the battery cell 10 can be sequentially pressed. Therefore, since pushing of the pouch case 13 caused by the pressing unit 130 can be dispersed, it is possible to prevent the pouch case 13 from being pushed following the advance of the pressing unit 130.

The arrangement of the plurality of pressing rollers 131a to 131c may be determined based on the pressure at which the pressing rollers 131a to 131c press the battery cell 10, the advancing speed of the pressing rollers 131a to 131c, and the area where the pressing rollers 131a to 131c make contact with the battery cell 10, and the like. That is, the distance between the rotation axis of the pressing roller 131b arranged at the center and the rotation axis of the pressing rollers 131a and 131c arranged on the edges may be adjusted to be farther or closer depending on the pressure at which the pressing rollers 131a to 131c press the battery cell 10, the advancing speed of the pressing rollers 131a to 131c, the area where the pressing rollers 131a to 131c make contact with the battery cell 10, and the like. For example, as the pressure at which the pressing rollers 131a to 131c press the battery cell 10, the advancing speed of the pressing rollers 131a to 131c, and the area where the pressing rollers 131a to 131c makes contact with the battery cell 10 increase, pushing of the pouch case 13 caused by the pressing rollers 131a to 131c may increase. Thereby, the plurality of pressing rollers 131a to 131c may be arranged so that the distance between the rotational axis of the pressing roller 131b arranged at the center and the rotational axis of the pressing rollers 131a and 131c arranged on the edges increases.

Meanwhile, the arrangement of the plurality of pressing rollers 131a to 131c described with reference to FIG. 6 is not limited by the contents set forth above, and the arrangement of the plurality of pressing rollers 131a to 131c may be variously changed according to the actual environment.

Additionally, in FIG. 6, a pressing jig 120 is shown for the convenience of understanding, but can be modified and changed in various ways, such as being implemented without arranging the pressing jig 120, or implemented by arranging the pressing jig 120, depending on the specifications of the battery cell and the process environment in which the invention is implemented. In a greater detail, the present disclosure is not limited to that shown in FIG. 6, and it goes without saying that the pressing roller 131 in the embodiment shown in FIG. 3 can be replaced with the pressin g roller 131 in FIG. 6.

FIG. 7 is a cross-sectional view cut in the A-A direction to explain a state in which a pressing roller of the battery cell manufacturing device shown in FIG. 5 presses a battery cell.

The pressing unit 130 can move in a direction orthogonal to the support surface of the support plate 110. Thereby, the pressing unit 130 can move in a direction closer to or further away from the battery cell 10 arranged on the support plate 110. Meanwhile, although not shown in FIG. 7, the pressing unit 130 may include a separate driving device that is connected to the connecting member 133 to move the pressing unit 130 in a direction orthogonal to the support surface of the support plate 110.

Since the pressing unit 130 can move in a direction orthogonal to the support surface of the support plate 110, the pressing unit 130 can pass through the main body part 121 of the pressing jig 120 and then advance while moving in a direction closer to the battery cell 10 (hereinafter, referred to as the pressing direction) in order to press the battery cell 10. Thereby, the pressing roller 131 can press the battery cell 10 beyond the pressing jig 120 in a state in which the pressing jig 120 presses the battery cell 10.

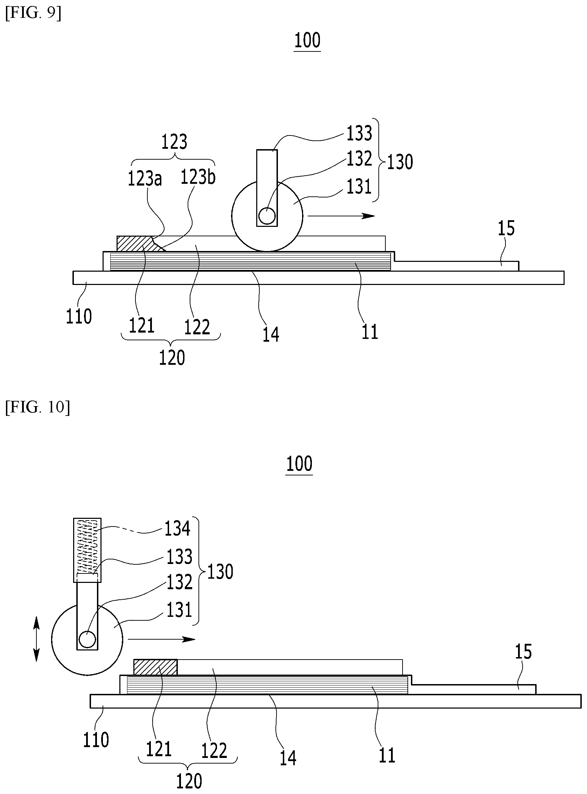

FIG. 8 is a cross-sectional view showing a modified embodiment of the pressing jig shown in FIG. 7. FIG. 9 is a cross-sectional view showing another modified embodiment of the pressing jig shown in FIG. 7.

Referring to FIG. 8, the main body part 121 of the pressing jig 120 may include an inclined part 123 formed on the advancing direction side of the pressing unit 130. The pressing unit 130 may advance while moving in the pressing direction along the inclined part 123, thereby pressing the battery cell 10.

The pressing roller 131 of the pressing unit 130 has a predetermined radius, and the main body part 121 of the pressing jig 120 also has a predetermined height, so that the pressing roller 131 cannot press the entire area of the battery cell 10 due to the geometrical structure of the pressing roller 131 and the main body part 121. This may cause a problem that gas remains in a part of the battery cell 10 that is not pressed by the pressing roller 131.

When the inclined part 123 is formed in the main body part 121, the inclination angle formed by the side surface of the main body part 121 in the advancing direction of the pressing unit 130 and the battery cell 10 is reduced. If the inclination angle formed by the side surface of the main body part 121 and the pressing unit 130 is reduced, the distance between the side surface of the main body part 121 and the position where the pressing unit 130 can make contact with the battery cell 10 is reduced. Thereby, the area where the pressing unit 130 does not press the battery cell 10 can be reduced, and the gas remaining inside the battery cell 10 can be effectively discharged.

Referring to FIG. 9, the inclined part 123 may include a first inclined part 123a that forms a predetermined inclination angle with the support plate 110, and a second inclined part 123b that forms a smaller inclination angle than the first inclined part 123a. At this time, a portion formed on the advancing direction side of the pressing unit 130 may correspond to the second inclined part 123b.

Since the second inclined part 123b forms a smaller inclination angle than the first inclined part 123a, the inclination angle formed by the side surface of the main body part 121 and the pressing unit 130 can be further reduced. Thereby, the area where the pressing unit 130 does not press the battery cell 10 can be further reduced, and the gas remaining inside the battery cell 10 can be effectively discharged.

Meanwhile, the shape of the inclined part 123 is not limited by those set forth above. For example, the inclined part 123 including the first inclined part 123a and the second inclined part 123b does not always have a constant inclination angle, and a form in which the angle of the inclined part 123 gradually decreases toward the advancing direction of the pressing unit 130 is also possible. That is, the side surface shape of the inclined part 123 may be an arc shape.

FIG. 10 is a cross-sectional view showing a modified embodiment of the pressing unit shown in FIG. 7.

Referring to FIG. 10, the pressing unit 130 may include an elastic member 134 that applies an elastic force in the pressing direction to the pressing roller 131. For example, the elastic member 134 may be arranged at the terminal end of the connecting member 133 to apply an elastic force to the pressing roller 131. At this time, separately from the pressing unit 130 moving in a direction orthogonal to the support surface of the support plate 110 by the above-mentioned driving device, the pressing roller 131 can further move by the expansion/contraction length of the elastic member 134.

Since the pressing roller 131 may advance while applying an appropriate amount of pressure to the battery cell 10 by the elastic member 134, the pressing roller 131 can advance while being more closely attached to the battery cell 10. Furthermore, even if a partial protrusion occurs on the surface of the battery cell 10, the elastic member 134 can provide a cushioning effect, thereby preventing excessive pressure from acting on the protruding part.

When the pressing unit 130 advances beyond the main body part 121 of the pressing jig 120, the pressing unit 130 must move in a direction away from the battery cell 10 by the height of the main body part 121, and then move again in a direction closer to the battery cell 10. As mentioned above, when the pressing roller 131 can further move by the expansion/contraction length of the elastic member 134 and the elastic member 134 that presses the pressing roller 131 is included in the pressing unit 130, the pressing unit 130 can return to its original position due to the elastic force of the elastic member 134 even if the pressing roller 131 moves in a direction away from the battery cell 10. Therefore, after the pressing unit 130 has advanced beyond the main body part 121 of the pressing jig 120, the pressing roller 131 can return to the position where it presses the battery cell 10 by the elastic member 134 without the need for a separate operation to control the movement of the pressing unit 130 in the pressing direction.

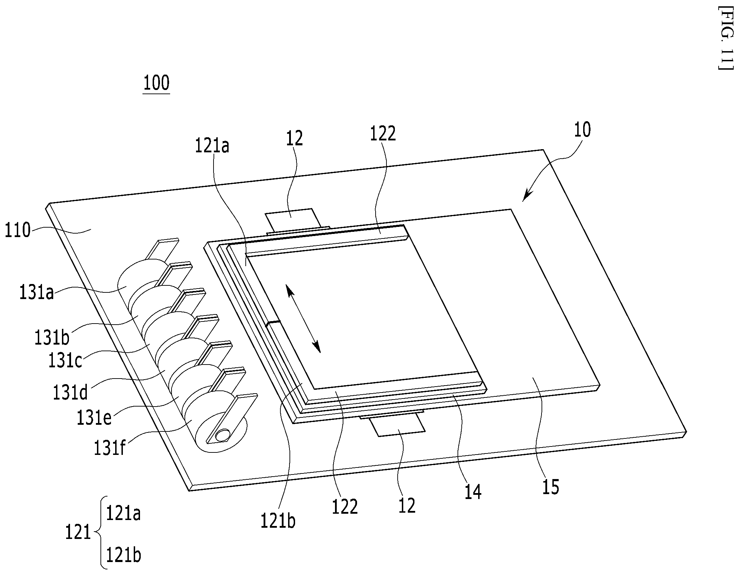

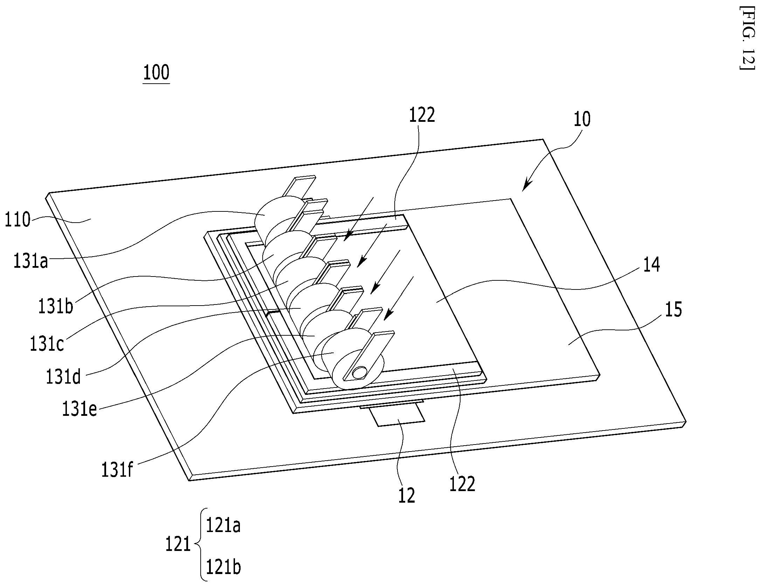

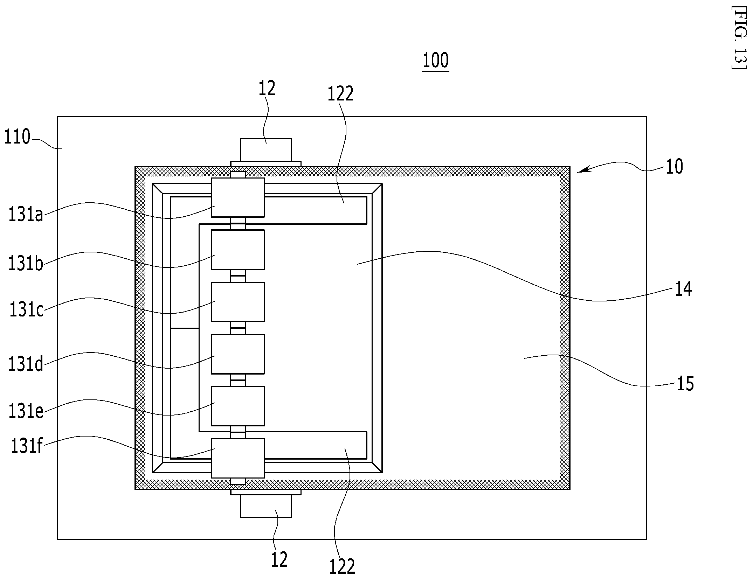

FIG. 11 is a perspective view showing a battery cell manufacturing device according to further additional embodiments of the present disclosure. FIG. 12 is a perspective view for explaining a state in which the pressing roller of the battery cell manufacturing device shown in FIG. 11 presses a battery cell. FIG. 13 is a top view for explaining the arrangement of the pressing roller of the battery cell manufacturing device shown in FIG. 12.

Referring to FIGS. 11 to 13, the main body part 121 of the pressing jig 120 includes a first main body part121a and a second main body part 121b which are each connected to the pair of pressing parts 122, and the first main body part 121a and the second main body part 121b can be expanded/contracted in a telescopic manner. Since the first main body part 121a and the second main body part 121b are expanded/contracted in a telescopic manner, the length of the main body part 121 can be increased or decreased. A pair of pressing parts 122 are connected to the terminal ends of the first main body part 121a and the second main body part 121b, respectively, so that the gap between the pair of pressing parts 122 is adjustable. Therefore, the degassing process can be performed by changing the gap between the pair of pressing parts 122 according to the size of the battery cell 10. However, changing the shape of the pressing jig 120 is not limited to the method set forth above. If necessary, it is possible to change the shape of the pressing jig 120 by replacing a pressing jig 120 having different specifications, such as size and width, from the pressing jig 120 mounted on the battery cell manufacturing device 100. That is, the pressing jig 120 can be replaceably mounted on the battery cell manufacturing device 100.

Meanwhile, when the gap between a pair of pressing parts 122 is changed, or the shape of the pressing jig 120 is changed by replacement, the pressing roller 131 may also be replaced so as to correspond to the changed shape of the pressing jig 120. That is, the pressing roller 131 may be replaced to have the same length as the gap between a pair of pressing parts 122.

In certain other embodiments, the pressing unit 130 may include a plurality of pressing rollers 131a to 131f that make contact with and press the surface of the battery cell 10, respectively, and the plurality of pressing rollers 131a to 131f may be arranged in a direction orthogonal to the advancing direction of the pressing unit 130. At this time, each of the plurality of pressing rollers 131a to 131f may move in a direction orthogonal to the support surface of the support plate 110. As mentioned above, the pressing unit 130 may include a separate driving device that is connected to the connecting member 133 and moves each of the pressing rollers 131a to 131f in a direction orthogonal to the support surface of the support plate 110.

At least some of the plurality of pressing rollers 131a to 131f can advance while moving in the pressing direction of applying pressure to the battery cell 10. More specifically, the pressing rollers 131b to 131e located between a pair of pressing parts 122 among the plurality of pressing rollers 131a to 131f can advance while moving in the pressing direction of applying pressure to the battery cell 10. Since the remaining pressing rollers 131a and 131f among the plurality of pressing rollers 131a to 131f cannot move in the pressing direction due to the pressing parts 122 of the pressing jig 120, they advance without moving in the pressing direction. Even if the gap between a pair of pressing parts 122 is changed, or the shape of the pressing jig 120 is changed by replacement, the battery cell 10 can be pressed by the pressing rollers located between a pair of pressing parts 122 among the plurality of pressing rollers 131a to 131f. Therefore, the battery cell manufacturing device 100 according to certain embodiments of the present disclosure can perform the degassing process without replacing the pressing roller 131 even if the specifications of the battery cell 10 are changed and the shape of the pressing jig 120 is changed.

Meanwhile, the plurality of pressing rollers 131a to 131f shown in FIGS. 11 to 13 are arranged on a straight line, but may be arranged to deviate from the straight line as described in FIG. 6. Below, descriptions overlapping with those described in FIG. 6 will be omitted.

The plurality of pressing rollers 131a to 131f may be arranged so that the pressing rollers arranged toward the center advance first. That is, the pressing rollers 131c and 131d located at the center first contact the battery cell 10, then the pressing rollers 131b and 131e adjacent toward the edge contact the battery cell 10, and finally, the pressing rollers 131a and 131f located at the edge may contact the battery cell 10. At this time, the arrangement of the plurality of pressing rollers 131a to 131f may be determined taking into consideration the pressure at which the pressing rollers 131a to 131f press the battery cell 10, the advancing speed of the pressing rollers 131a to 131f, the area where the pressing rollers 131a to 131f contact the battery cell 10, and the like.

Even in FIGS. 11 to 13, the pressing jig 120 is similarly shown for the convenience of understanding, but can be modified and changed in various ways, such as being implemented without arranging the pressing jig 120, or being implemented by arranging the pressing jig 120, according to the specifications of the battery cell and the process environment in which the invention is implemented. In a greater detail, the present disclosure is not limited to those shown in FIGS. 11 to 13, and in the embodiment of FIG. 3, it goes without saying that the pressing roller 131 can be replaced with the pressing roller 131 of FIG. 11.

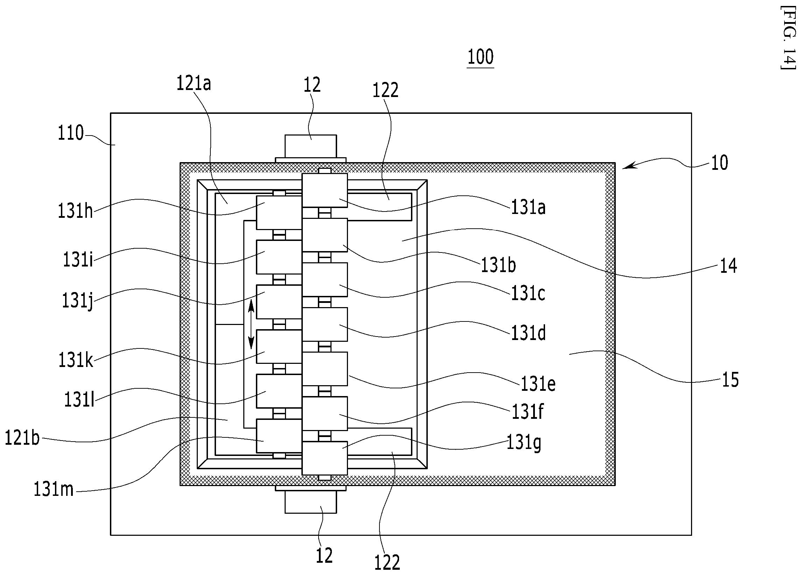

FIG. 14 is a top view for explaining the arrangement of the pressing roller of the battery cell manufacturing device according to further additional embodiments of the present disclosure.

Referring to FIG. 14, the plurality of pressing rollers 131a to 131m may comprise a first array arranged in a direction orthogonal to the advancing direction and a second array arranged side by side with the first array. At this time, the pressing rollers 131a to 131g of the first array and the pressing rollers 131h to 131m of the second array may be arranged to deviate from each other. Thereby, the area between the pressing rollers 131b to 131f of the first array that presses the battery cell 10 is pressed by the pressing rollers 131i to 1311 of the second array, so that the gas inside the battery cell 10 can be discharged effectively.

Even in FIG. 14, the pressing jig 120 is similarly shown for the convenience of understanding, but can be modified and changed in various ways, such as being implemented without arranging the pressing jig 120, or being implemented by arranging the pressing jig 120, according to the specifications of the battery cell and the process environment in which the invention is implemented. In a greater detail, the present disclosure is not limited to those shown in FIG. 14, and in the embodiment of FIG. 3, it goes without saying that the pressing roller 131 can be replaced with the pressing roller 131 of FIG. 14.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

### [Description of Reference Numerals]

10: battery cell
11: electrode assembly
12: electrode lead
13: pouch case
14: housing part
15: gas pocket part
100: battery cell manufacturing device
110: support plate
120: pressing jig
121: main body part
122: pressing part
123: inclined part
130: pressing unit
131: pressing roller
132: rotary shaft
133: connecting member
134: elastic member

## Claims

1. A battery cell manufacturing device, comprising:
a support plate on which a battery cell is placed; and
a pressing unit that presses a surface of the battery cell while advancing in one direction over a large area of the battery cell so as to press the large area of the battery cell,
wherein the pressing unit comprises,
a plurality of pressing rollers that are arranged in a direction orthogonal to an advancing direction, and make contact with and press the surface of the battery cell, respectively, and
wherein the pressing unit advances in a state in which the surface of the battery cell is pressed by each of the plurality of pressing rollers, so that wrinkles do not occur on the surface of the battery cell when pressing with the pressing unit.

2. The battery cell manufacturing device of claim 1,
wherein each of the plurality of pressing rollers is independently rotatable.

3. The battery cell manufacturing device of claim 1, wherein:
the plurality of pressing rollers are arranged so that their rotation axes are parallel to each other,
and are arranged so that the rotation axis of at least one pressing roller among the plurality of pressing rollers does not overlap with an extension line of the rotation axis of the other pressing rollers.

4. The battery cell manufacturing device of claim 3,
wherein the arrangement of the plurality of pressing rollers is determined based on a pressure at which the pressing rollers press the battery cell, an advancing speed of the pressing rollers, and an area where the pressing rollers make contact with the battery cell.

5. The battery cell manufacturing device of claim 4,
wherein the plurality of pressing rollers are arranged so that the pressing rollers positioned closer to a center press the surface of the battery cell first.

6. The battery cell manufacturing device of claim 1,
further comprising a pressing jig arranged on at least both side edges of the battery cell so as to press the at least both side edges of the battery cell,
wherein the pressing unit advances in a state in which the edges of the battery cell are pressed by the pressing jig.

7. The battery cell manufacturing device of claim 6, wherein:
the pressing jig comprises,
a main body part that extends in a direction orthogonal to the advancing direction of the pressing unit; and
a pair of pressing parts that extend in parallel to the advancing direction of the pressing roller from both ends of the main body part and face each other,
wherein the pressing unit presses the battery cell between the pair of pressing parts.

8. The battery cell manufacturing device of claim 7, wherein:
the pressing unit is movable in a direction orthogonal to the support surface of the support plate, and
the pressing unit advances while passing through the main body part and then moving in a pressing direction of applying pressure to the battery cell.

9. The battery cell manufacturing device of claim 8, wherein:
the main body part comprises an inclined part formed on an advancing direction side of the pressing unit, and
the pressing unit advances while moving in the pressing direction along the inclined part to thereby press the battery cell.

10. The battery cell manufacturing device of claim 9,
wherein the inclined part comprises,
a first inclined part that forms a predetermined inclination angle with the support plate; and
a second inclined part that forms a smaller inclination angle than the predetermined inclination angle of the first inclined part.

11. The battery cell manufacturing device of claim 9,
wherein the inclined part is configured such that an inclination angle formed with the support plate gradually decreases toward the advancing direction side of the pressing unit.

12. The battery cell manufacturing device of claim 7,
wherein the pressing unit comprises an elastic member that applies an elastic force to the plurality of pressing rollers in the pressing direction.

13. The battery cell manufacturing device of claim 7,
wherein a gap between the pair of pressing parts is adjustable.

14. The battery cell manufacturing device of claim 13,
wherein the main body part comprises a first main body part and a second main body part which are each connected to the pair of pressing parts, and
the first main body part and the second main body part are expandable and contractible in a telescopic manner.

15. The battery cell manufacturing device of claim 13,
wherein each of the plurality of pressing rollers is movable in a direction orthogonal to the support surface of the support plate.

16. The battery cell manufacturing device of claim 15,
wherein at least some of the plurality of pressing rollers advances while moving in a pressing direction of applying pressure to the battery cell.

17. The battery cell manufacturing device of claim 16,
wherein the pressing roller located between the pair of pressing parts among the plurality of pressing rollers advances while moving in the pressing direction of applying pressure to the battery cell.

18. The battery cell manufacturing device of claim 6,
wherein the pressing jig is made of a metallic material including stainless steel, or a non-metallic material including Teflon or acrylic.

19. The battery cell manufacturing device of claim 6,
wherein the pressing jig is mounted in a replaceable manner.

20. The battery cell manufacturing device of claim 1,
wherein the plurality of pressing rollers comprise a first array arranged in a direction orthogonal to the advancing direction and a second array arranged side by side with the first array.

21. The battery cell manufacturing device of claim 20,
wherein the pressing rollers of the first array and the pressing rollers of the second array are arranged in a staggered manner with respect to each other.
